# EUROPÄISCHE PATENTSCHRIFT

(11) **EP 1 515 025 B1**
(45) Veröffentlichungstag und Bekanntmachung des Hinweises auf die Patenterteilung: **22.11.2006**
(21) Anmeldenummer: 04103871.2
(22) Anmeldetag: 21.02.2002
(51) Int. Cl.: F02D 41/00, F02D 41/30, F02D 35/02, F02D 13/02, F02D 9/02

(54) **Verfahren zur Steuerung eines Viertakt-Ottomotors und Reduzierung des Klopfens**
Method of controlling a four stroke Otto engine and reduction of knocking
Procédé de commande d'un moteur Otto à quatre temps et réduction des cliquetis

(43) Veröffentlichungstag der Anmeldung: 16.03.2005
(62) Teilanmeldung aus: 02100167.2
(73) Patentinhaber: Ford Global Technologies, LLC., Dearborn, MI 48126 (US)
(72) Erfinder: Phlips, Patrick, Dr., 50858 Köln (DE)
(74) Vertreter: Drömer, Hans-Carsten

(56) Entgegenhaltungen:
- EP-A- 0 446 065
- EP-A- 1 416 144
- US-A- 4 364 353
- US-A- 4 426 985
- PATENT ABSTRACTS OF JAPAN Bd. 008, Nr. 203 (M-326), 18. September 1984 (1984-09-18) -& JP 59 093939 A (TOYOTA JIDOSHA KK), 30. Mai 1984 (1984-05-30)

## Beschreibung

Die Erfindung betrifft ein Verfahren zur Steuerung eines Viertakt-Ottomotors durch eine koordinierte Regelung des Luft-Kraftstoff-Gemisches, der Nockenwellen-Verstellung und des Drosselklappenwinkels.

In Automobilen verwendete Brennkraftmaschinen mit Fremdzündung ("Ottomotoren") werden häufig mit einer stöchiometrischen Luft-Kraftstoff-Mischung betrieben, welche eine sehr effiziente Nachbehandlung der Emissionen und eine Drosselung zum Zwecke der Lastregelung erlaubt. Als Kraftstoff wird dabei fast ausschließlich Benzin verwendet. Die bei derartigen Motoren mit der Drosselung und dem stöchiometrischen Betrieb bei Teillast verbundenen Kraftstoffverluste können durch einen Magerbetrieb verringert werden. Ein derartiger Magerbetrieb kann entweder vom Typ homogen oder vom Typ geschichtet mit Direkteinspritzung sein. In beiden Fällen können die den Motor verlassenden NOₓ-Emissionen nicht durch einen herkömmlichen Dreiwegekatalysator behandelt werden. Aus diesem Grunde sind Magerbetrieb-NOₓ-Fallen (LNT, Lean NOₓ Traps) entwickelt worden, durch welche auch die aus einer magereren Verbrennung entstehenden Abgase wirksam behandelt werden können. Der Nachteil derartiger, auf Magerbetrieb-NOₓ-Fallen basierender Systeme besteht darin, daß diese sehr viel teurer als Systeme mit herkömmlichen Dreiwegekatalysatoren sind. Im Falle der geschichteten Direkteinspritzung sind ferner die Systeme für Luftzufuhr, Kraftstoffzufuhr, Abgasrückführung und Zündung insgesamt sehr viel komplexer und daher teurer als bei üblichen Motoren.

Ein alternativer "stöchiometrischer" Ansatz zur Verbesserung des Kraftstoffverbrauches besteht darin, kleinere Motoren mit einem Turbolader (booster) zu versehen. Jedoch sind auch hierbei die Zusatzkosten für den Turbolader, den Zwischenkühler und deren Einrichtung erheblich.

Für niedrigpreisige Motoren kommen daher die oben genannten Technologien praktisch nicht in Frage. Für diese Motoren ist eine variable Nockenwellensteuerung realistischer. Die damit erzielbaren Verbesserungen in der Kraftstoffausnutzung konzentrieren sich jedoch auf den Bereich geringerer Lasten. Es besteht daher ein Bedürfnis, die Kraftstoffausnutzung auch im Bereich mittlerer und hoher Lasten zu verbessern. Diese Bereiche werden gerade bei kleinen Motoren, die in Fahrzeugen mit einem geringen Verhältnis von Leistung zu Gewicht eingesetzt werden, häufig verwendet.

In diesem Zusammenhang sind Viertakt-Ottomotoren mit einem Einlaßventil und einem Auslaßventil pro Zylinder von besonderem Interesse, wobei beide Ventile von einer gemeinsamen Nockenwelle betätigt werden. Derartige Motoren sind die einfachsten in Massenproduktion befindlichen Viertakt-Motoren, und sie bilden die Mehrzahl der niedrigpreisigen Vier-, Sechs- und Achtzylindermotoren.

Bei der Nockenwellen-Verstellung handelt es sich um eine bekannte Technologie, die zunehmend bei der Produktion von Benzinmotoren mit zwei obenliegenden Nockenwellen eingesetzt wird. Wenn mit einer Verstellung der Nockenwelle die Öffnungs- und Schließzeiten der angekoppelten Ventile gleichermaßen verschoben werden, spricht man von einer "dual gleichen" Verstellung (dual equal VCT) . Bei Motoren mit einer einzigen Nockenwelle verringert die dual gleiche variable Nockenwellensteuerung die Motoremissionen und den Kraftstoffverbrauch. Eine Strategie zur Phasensteuerung derartiger Nockenwellen wird bei Stein et al. (Dual Equal VCT - A Variable Camshaft Timing Strategy for Improved Fuel Economy and Emissions, SAE Technical Paper 950975) erläutert. Der Kraftstoffverbrauch bei Teillast wird durch Hinzufügung von verdünnendem Gas zur Mischung (spätes Schließen des Auslaßventils und Öffnen des Einlaßventils), durch Erhöhung des effektiven Expansionsverhältnisses (spätes Öffnen des Auslaßventils) und Reduzierung der Pumpverluste durch Reduzierung des effektiven Hubraumes (spätes Schließen der Einlaßventile) verbessert. Dies alles wird erreicht durch ein verspätetes Öffnens sowohl der Auslaß- als auch der Einlaßventile bei Teillast. Die Einschränkungen dieses Verfahrens bestehen jedoch darin, daß die Verbesserung der Kraftstoffausnutzung auf die untere Hälfte des Lastbereiches konzentriert ist.

Darüber hinaus ist eine als "Atkinsonzyklus" bezeichnete Steuerungstechnik bekannt, durch welche die Motoreffizienz insbesondere bei höheren Lasten gesteigert werden kann. Eine Definition und Analyse des Otto-Atkinsonzyklus, der ein variables Schließen der Einlaßventile und ein veränderliches Brennkammervolumen erfordert, findet sich bei Luria et al. (The Otto-Atkinson engine, a new concept in automotive economy, SAE Technical Paper 820352) und Boggs et al. (The Otto-Atkinson engine - Fuel Economy and Emission Results and Hardware Design, SAE Technical Paper 950089). In der einfachsten Form erfordert der Atkinsonzyklus nur ein erhöhtes Kompressionsverhältnis und ein spätes Schließen der Einlaßventile (vgl. Blakey, S., et al., "A Design and Experimental Study of an Otto Atkinson Cycle Engine Using Late Intake Valve Closing", SAE Technical Paper 910451). In der Praxis werden dabei häufig zusätzliche Konstruktionsänderungen auf der Einlaßseite des Motors vorgenommen, um eine optimale Drehmomentkurve des Motors bei Vollast zu erhalten.

Die US 5 123 388 offenbart eine Brennkraftmaschine, bei welcher das Schließen eines Einlaßventils verzögert wird, wenn ein Klopfsensor anspricht. Die Verstellung der Ventilsteuerung in Reaktion auf ein Klopfen, insbesondere die Verzögerung des Schließens des Einlaßventils, wird auch in der FR 2 796 418 offenbart. Des Weiteren ist es aus der JP 0 8303282 bekannt, bei Auftreten von Klopfen von einem Magerbetrieb zu einem stöchiometrischen Motorbetrieb überzugehen.

Aus der EP 0 446 065 A2 ist ein Verfahren zum Steuern eines Verbrennungsmotors bekannt, bei dem zunächst Betriebsparameter des Motors einschließlich Motordrehzahl und Motortemperatur erfasst werden und anschließend in Abhängigkeit davon, ob die erfasste Motortemperatur innerhalb oder unterhalb eines bestimmten Temperaturbereichs liegt, das Einlassventilschließtiming auf ein jeweils optimales Timing gesteuert wird.

Aus der EP 1 416 144 A2 ist ein Verfahren und eine Vorrichtung zur Erfassung abnormer Verbrennungsbedingungen wie z.B. klopfende Verbrennung in einem Magermixmotor bekannt.

Aus der US 4 364 353 A ist es zur Reduzierung von Klopfen in einer fremdgezündeten, gemischverdichteten Brennkraftmaschine bekannt, eine Zündzeitpunktverstellung in Abhängigkeit von Signalen eines Klopfsensors in Richtung spät nur bis zu einem vorgegebenen Maximalwert durchzuführen und bei weiterem Klopfen den Drosselklappenwinkel fortschreitend zu verkleinern.

Aus der JP 59093939 A ist es zur Reduzierung von Klopfen bekannt, den Schließzeitpunkt des Einlassventils zu verzögern.

Vor diesem Hintergrund war es Aufgabe der vorliegenden Erfindung, die Kraftstoffausnutzung in einem Viertakt-Ottomotor mit einem Einlaßventil und einem Auslaßventil pro Zylinder, die von einer Nockenwelle mit einer Verstelleinrichtung betätigt werden, zu verbessern.

Diese Aufgabe wird durch ein Verfahren mit den Merkmalen des Anspruchs 1 gelöst.

Vorteilhafte Ausgestaltungen sind in den Unteransprüchen enthalten.

Die Erfindung betrifft ein Verfahren zur Steuerung eines Viertakt-Ottomotors, insbesondere eines Viertakt-Ottomotors der nachstehend näher erläuterten Art, welcher mindestens ein Einlaßventil und ein Auslaßventil pro Zylinder enthält, die von einer gemeinsamen Nockenwelle mit einer Verstelleinrichtung betätigt werden. Das Verfahren nimmt bei Vollast und insbesondere bei hohen Drehzahlen des Motors eine koordinierte Regelung des Luft-Kraftstoff-Gemisches, der Nockenwellen-Verstellung und des Drosselklappenwinkels vor. Es ist dadurch gekennzeichnet, daß bei Detektion eines Klopfzustandes die folgenden Maßnahmen durchgeführt werden:
a) eine Reduzierung der Kühlmitteltemperatur auf Werte von vorzugsweise deutlich unter 90°C, wobei insbesondere der vorstehend erläuterte Wachsthermostat verwendet werden kann;
b) die Zufuhr eines Luft-Kraftstoff-Gemisches, welches vorzugsweise erheblich magerer ist als ein stöchiometrisches Gemisch; auf diese Weise werden der Kraftstoffverbrauch, die Klopftendenz und die Abgastemperatur gleichzeitig reduziert;
c) die Verspätung der Steuerzeiten, um mit minimaler Drosselung den Füllungsgrad zu verringern;
d) die Drosselung des Motors, wobei vorzugsweise ein elektromagnetisch betätigtes Drosselventil in Koordination mit der Nockenwellensteuerung zum Einsatz kommt.

Bei Vollast und insbesondere bei hohen Motordrehzahlen kann der oben beschriebene Viertakt-Ottomotor einen Füllungsgrad aufweisen, welcher in Verbindung mit dem hohen Kompressionsverhältnis übermäßig ist. Je nach den Umgebungsbedingungen wie dem atmosphärischen Druck, der Höhe, der Kraftstoffqualität und dergleichen, kann dies zu einem Klopfen des Motors führen oder nicht. Unter geeigneten Bedingungen kann ein effizienter Motorbetrieb mit akzeptablen Abgastemperaturen durch eine koordinierte Computerregelung des Kraftstoffgemisches, der Nockenwellen-Verstellung und des Drosselklappenwinkels erreicht werden. Sollte jedoch frühzeitig in Abweichung von den Idealbedingungen ein Klopfzustand festgestellt werden, was insbesondere durch ein entsprechendes Sensorsystem geschehen kann, so können die oben genannten Maßnahmen zur Unterdrückung eines derartigen Klopfens eingesetzt werden.

Dabei werden die Maßnahmen a) bis d) in der genannten Reihenfolge eingeleitet. Das heißt, daß eine bestimmte Maßnahme erst dann begonnen wird, wenn die in der Reihenfolge vorangegangene(n) Maßnahme(n) aus irgendeinem Grunde nicht angewendet werden kann/können oder bereits vollständig ausgeschöpft ist/sind, ohne daß das gewünschte Ergebnis zufriedenstellend erreicht ist.

Das erfindungsgemäße Verfahren kann insbesondere mit einem Viertakt-Ottomotor mit mindestens einem Einlaßventil und einem Auslaßventil pro Zylinder sowie einer gemeinsamen Nockenwelle mit einer Verstelleinrichtung für die genannten Ventile ausgeführt werden, welcher derart eingerichtet ist, daß er im Zustand der Frühverstellung der Nockenwelle im Atkinsonzyklus arbeitet.

Mit einem derartigen Motor lassen sich die Vorteile des Atkinsonzyklus erzielen, d. h. eine Steigerung der Motoreffizienz bei höheren Lasten. Die Kombination eines Atkinsonzyklus mit einem Ottomotor mit zwei Ventilen erzielt ferner einen synergetischen Effekt dadurch, daß die begrenzte spezifische Leistung dieses Motors gut zur begrenzten spezifischen Leistung des Atkinsonzyklus paßt. Ferner harmoniert der bei Teillasten für eine dual gleiche Nockenwellen-Verstellung eintretende Vorteil einer Einlaßmaskierung gut mit der Notwendigkeit, bei einem Atkinsonzyklus bei Vollast und hoher Drehzahl den Luftfluß zu begrenzen.

Im Rahmen der weiteren Ausgestaltung des Ottomotors weist dieser ein - im Vergleich zu einem herkömmlichen Motor mit Fremdzündung - erheblich erhöhtes Kompressionsverhältnis auf, welches typischerweise über 12 : 1 liegt gegenüber ca. 10 : 1 bei herkömmlichen Motoren.

Ferner ist der Viertakt-Ottomotor vorzugsweise derart eingerichtet, daß das Einlaßventil im Zustand der Frühverstellung der Nockenwelle im Vergleich zu einem herkömmlichen Motor mit Fremdzündung spät geschlossen wird. Das späte Schließen des Einlaßventils kann dabei insbesondere bei 40° bis 80°, vorzugsweise bei 50° bis 60° Kurbelwellenwinkel nach dem unteren Totpunkt BDC des Kolbens stattfinden und somit etwa 40° später als bei herkömmlichen Motoren.

Ferner wird das Einlaßventil - wie bekannt - im Zustand der Frühverstellung der Nockenwelle vorzugsweise vor dem oberen Totpunkt des Kolbens am Ende des Ausstoßtaktes geöffnet.

Weiterhin weist der Ottomotor vorteilhafterweise einen erheblich größeren Hubraum als ein herkömmlicher Motor mit vergleichbarem Leistungsverhalten auf. Durch diesen größeren Hubraum können die mit dem Atkinsonzyklus verbundenen Leistungsverringerungen kompensiert werden.

Gemäß einer Weiterbildung des Ottomotors enthält dieser ein vorzugsweise elektromagnetisch betätigtes Drosselventil sowie eine Motorsteuerung, wobei die Motorsteuerung mit dem Drosselventil und der Verstelleinrichtung der Nockenwelle verbunden und derart eingerichtet ist, daß diese die beiden genannten Elemente zur Erfüllung von Drehmomentanforderungen koordiniert regelt. Hierdurch wird sichergestellt, daß die verbesserte Kraftstoffausnutzung nicht dazu führt, daß der Motor Leistungsanforderungen durch den Fahrer, die durch eine Betätigung des Gaspedals signalisiert werden, nicht mehr nachkommen kann. Der Motor behält somit ein in etwa gleichbleibend gutes Fahrverhalten.

Weiterhin enthält der Motor vorzugsweise ein Sensorsystem zur Detektion von Klopfzuständen. Derartige Systeme sind aus dem Stand der Technik bekannt und dienen dazu, die vorzeitige Selbstzündung (sogenanntes Klopfen) von Luft-Kraftstoff-Gemischen im Zylinder zu detektieren, damit geeignete Gegenmaßnahmen zur Unterdrückung dieser Vorgänge eingeleitet werden können. Das Sensorsystem sollte vorteilhafterweise in der Lage sein, Klopfzustände über den gesamten Drehzahlbereich des Motors zu detektieren.

Darüber hinaus kann der Ottomotor derart ausgestaltet sein, daß dieser bei hohen Drehzahlen einen verringerten Füllungsgrad aufweist. Dabei kann zur Erreichung dieses Zieles insbesondere der Hub und/oder der Durchmesser des Einlaßventils reduziert, die Länge und/oder der effektive Durchmesser des Einlaßkanals reduziert und/oder das Einlaßventil maskiert sein. Unter einer Maskierung des Einlaßventils wird in diesem Zusammenhang eine spezielle, hochstehende Formgebung des Randes um das Einlaßventil im Inneren des Zylinders verstanden, wie sie z. B. in der US 5 950 582 beschrieben ist. Durch die genannten konstruktiven Maßnahmen zur Reduktion des Füllungsgrades wird die mit der Ansteuerung der Nockenwelle verbundene Erhöhung des Füllungsgrades wieder kompensiert.

Gemäß einer anderen Weiterbildung weist der Ottomotor eine von der Motorsteuerung kontrollierte Einrichtung zur Veränderung der Kühlmitteltemperatur auf. Insbesondere sollte diese Einrichtung eine aktive Kühlung bewirken können. Hierdurch kann der Gefahr eines eventuellen Klopfens des Motors entgegengewirkt werden.

Die Einrichtung zur Veränderung der Kühlmitteltemperatur kann dabei insbesondere einen Wachsthermostaten mit einer elektrischen Heizung enthalten. Durch einen kontrolliert eingeleiteten Phasenübergang des Wachses kann bei Bedarf Energie aus dem Kühlmittel entnommen oder hinzugefügt werden, um dessen Temperatur in der gewünschten Weise zu verändern.

Die Erfindung wird nachfolgend anhand der Figuren beispielhaft näher erläutert.
Es zeigen:
- Fig. 1: den Ventilhub eines Auslaßventils und eines Einlaßventils in Abhängigkeit vom Kurbelwellenwinkel bei einer Ansteuerung im Atkinsonzyklus bei Vollast; und
- Fig. 2: eine Darstellung entsprechend Figur 1 bei einer Ansteuerung unter Teillast.

Die beiden Figuren zeigen eine Auftragung des Ventilhubes (vertikale Achse) über dem Kurbelwellenwinkel (horizontale Achse) in einem Viertakt-Ottomotor mit mindestens einem Einlaßventil und einem Auslaßventil pro Zylinder, welche von einer gemeinsamen Nockenwelle mit einer Verstelleinrichtung gesteuert werden. Die gestrichelte Kurve 11 entspricht dabei dem Öffnungsverhalten des Auslaßventils bei Normalbetrieb und die gestrichelte Kurve 12 dem Öffnungsverhalten des Einlaßventils bei Normalbetrieb. Zu erkennen ist, daß sich die Öffnungen von Einlaßventil und Auslaßventil im Bereich des oberen Totpunktes (TDC), der zwischen dem Ausstoßtakt und dem Ansaugtakt liegt, etwas überlappen.

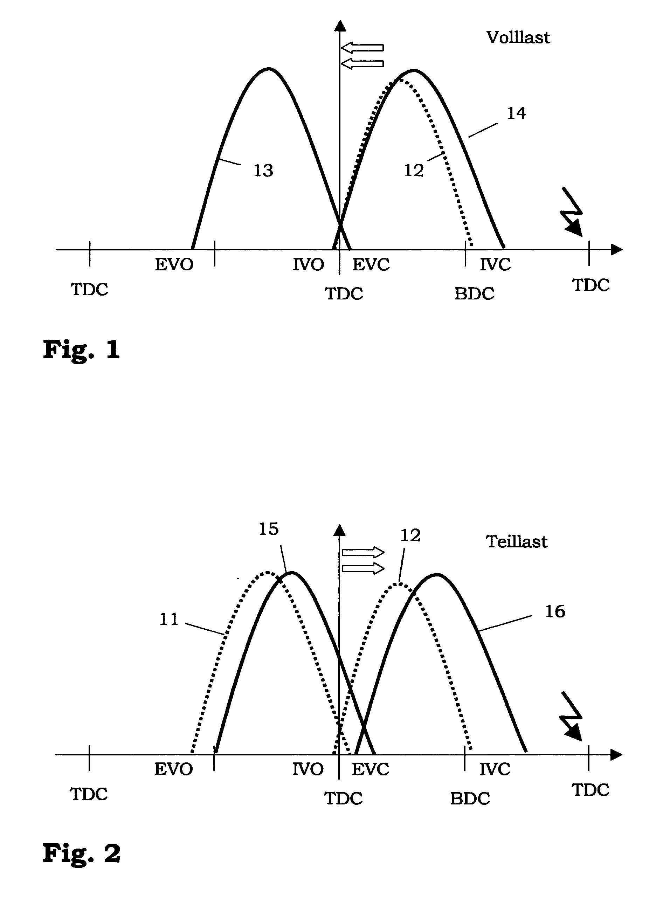

Figur 1 zeigt insbesondere die Steuerung des Einlaßventils und des Auslaßventils unter Vollast. Die Nockenwelle ist dabei derart ausgelegt, daß in Frühstellung das Auslaßventil mit der herkömmlichen Öffnungskurve 13 betrieben wird, die deckungsgleich mit Kurve 11 aus Figur 2 ist. Hingegen erfolgt das Schließen des Einlaßventils (IVC) entsprechend Kurve 14 verzögert gegenüber der Kurve 12 eines herkömmlichen Ottomotors. Insbesondere kann das Einlaßventil erst bei ca. 40° bis 60° nach dem unteren Totpunkt (BDC) geschlossen werden. Auf diese Weise werden bei Vollast des Motors die vom Atkinsonzyklus bekannten Vorteile hinsichtlich der Kraftstoffausnutzung erzielt.

Figur 2 zeigt in einer entsprechenden Darstellung die Ansteuerung des Einlaßventils und des Auslaßventils bei Teillast des Motors. Zu erkennen ist, daß die beiden Öffnungskurven 15 des Auslaßventils beziehungsweise 16 des Einlaßventils in Richtung Spätverstellung verschoben sind, so daß es durch eine erhöhte interne Abgasrückführung, eine Erhöhung des effektiven Expansionsverhältnisses sowie eine Reduzierung der Pumpverluste durch Verringerung des effektiven Hubraumes zu einer Verbesserung der Kraftstoffausnutzung kommt.

Die in den beiden Figuren repräsentierte Regelungsstrategie kann vorteilhafterweise in einem äußerst günstigen Motordesign mit einer gemeinsamen Nockenwelle für ein Einlaßventil und ein Auslaßventil pro Zylinder und mit einer gemeinsamen Verstelleinrichtung erzielt werden. welle für ein Einlaßventil und ein Auslaßventil pro Zylinder und mit einer gemeinsamen Verstelleinrichtung erzielt werden.

## Patentansprüche

1. Verfahren zur Steuerung eines Viertakt-Ottomotors durch eine koordinierte Regelung des Luft-Kraftstoff-Gemisches, der Nockenwellen-Verstellung und des Drosselklappenwinkels,
**dadurch gekennzeichnet, daß**
bei Detektion eines Klopfzustandes folgende Maßnahmen durchgeführt werden:
a) Reduzierung der Kühlmitteltemperatur auf unter 90°C;
b) Zufuhr eines mageren Luft-Kraftstoff-Gemisches;
c) Verzögerung der Nockenwellen-Steuerung;
d) Drosselung des Motors;
wobei jede der Maßnahmen a) bis d) erst eingeleitet wird, wenn die in der genannten Reihenfolge vorangegangenen Maßnahmen nicht durchgeführt werden können oder erschöpft sind.

2. Verfahren nach Anspruch 1,
**dadurch gekennzeichnet, daß**
es sich um einen Viertakt-Ottomotor mit einem oder zwei Einlaßventilen und einem Auslaßventil pro Zylinder handelt, wobei die Ventile von einer gemeinsamen Nockenwelle mit einer Verstelleinrichtung betätigt werden, und wobei der Viertakt-Ottomotor derart eingerichtet ist, daß er im Zustand der Frühverstellung der Nockenwelle im Atkinsonzyklus arbeitet.

3. Verfahren nach Anspruch 2,
**dadurch gekennzeichnet, daß**
im Zustand der Frühverstellung der Nockenwelle das Einlaßventil spät geschlossen wird, vorzugsweise bei ca. 40° bis 80° Kurbelwellenwinkel nach dem unteren Totpunkt (BDC) des Kolbens.

4. Verfahren nach Anspruch 2 oder 3,
**dadurch gekennzeichnet, daß**
im Zustand der Frühverstellung der Nockenwelle das Einlaßventil in der Nähe des oberen Totpunktes (TDC) des Kolbens geöffnet wird.

5. Verfahren nach einem der Ansprüche 2 bis 4,
**dadurch gekennzeichnet, daß**
der Viertakt-Ottomotor ein vorzugsweise elektromagnetisch betätigtes Drosselventil und eine Motorsteuerung aufweist, wobei die Motorsteuerung mit dem Drosselventil und der Verstelleinrichtung verbunden und derart eingerichtet ist, daß sie diese zur Erfüllung von Drehmomentanforderungen koordiniert regelt.

6. Verfahren nach einem der Ansprüche 2 bis 5,
**dadurch gekennzeichnet, daß**
der Viertakt-Ottomotor ein Sensorsystem zur Detektion von Klopfzuständen aufweist.

7. Verfahren nach einem der Ansprüche 2 bis 6,
**dadurch gekennzeichnet, daß**
der Viertakt-Ottomotor derart ausgestaltet ist, daß er bei hohen Drehzahlen einen verringerten Füllungsgrad aufweist, wobei insbesondere der Hub und/oder der Durchmesser des Einlaßventils reduziert, die Länge und/oder der effektive Durchmesser des Einlaßkanals reduziert und/oder das Einlaßventil maskiert ist.

8. Verfahren nach einem der Ansprüche 2 bis 7,
**dadurch gekennzeichnet, daß**
der Viertakt-Ottomotor eine von der Motorsteuerung kontrollierte Einrichtung zur Veränderung der Kühlmitteltemperatur aufweist.

9. Verfahren nach Anspruch 8,
**dadurch gekennzeichnet, daß**
die Einrichtung einen Wachsthermostaten mit einer elektrischen Heizung enthält.

## Claims

1. Method of controlling a four-stroke spark-ignition engine by coordinated control of the air-fuel mixture, the variable camshaft timing and the throttle valve angle,
**characterized in that**
on detection of an engine knock condition, the following measures are undertaken:
a) Reduction of the coolant temperature to less than 90°C;
b) Delivery of a leaner air-fuel mixture;
c) Delay of the variable camshaft timing;
d) Engine throttling;
each of the measures a) to d) only being initiated if the prior ranking measures cannot be undertaken or have been exhausted.

2. Method according to Claim 1,
**characterized in that**
it involves a four-stroke spark-ignition engine having one or two inlet valves and one exhaust valve per cylinder, the valves being actuated by a common camshaft having a variable timing device, and with the four-stroke spark-ignition engine being set up in such a way that with the camshaft advanced it functions on the Atkinson cycle.

3. Method according to Claim 2,
**characterized in that**
with the camshaft advanced, the inlet valve is closed late, preferably at a crankshaft angle of approximately 40° to 80° after the bottom dead centre (BDC) of the piston.

4. Method according to Claim 2 or 3,
**characterized in that**
with the camshaft advanced, the inlet valve is opened close to the top dead centre (TDC) of the piston.

5. Method according to one of Claims 2 to 4,
**characterized in that**
the four-stroke spark-ignition engine has a preferably solenoid-actuated throttle valve and an engine management system, with the engine management system being connected to the throttle valve and the variable timing device and designed in such a way that it co-ordinates control of these in order to satisfy torque requirements.

6. Method according to one of Claims 2 to 5,
**characterized in that**
the four-stroke spark-ignition engine has a sensor system for the detection of engine knock conditions.

7. Method according to one of Claims 2 to 6,
**characterized in that**
the four-stroke spark-ignition engine is designed in such a way that its volumetric efficiency at high engine speeds is reduced, in particular by reducing the lift and/or the diameter of the inlet valve, reducing the length and/or the inside diameter of the inlet port and/or masking the inlet valve.

8. Method according to one of Claims 2 to 7,
**characterized in that**
the four-stroke spark-ignition engine has a device for varying the coolant temperature controlled by the engine management system.

9. Method according to Claim 8,
**characterized in that**
the device contains a waxstat with electrical heating.

## Revendications

1. Procédé de commande d'un moteur Otto à quatre temps au moyen d'une régulation coordonnée du mélange air/carburant, du réglage de l'arbre à came et de l'angle du papillon des gaz,
**caractérisé en ce que**
lors de la détection d'un état de cliquetis, les mesures suivantes sont effectuées :
a) réduction de la température du liquide de refroidissement en dessous de 90°C ;
b) introduction d'un mélange maigre d'air/carburant ;
c) ralentissement de la commande de l'arbre à came ;
d) décélération du moteur ;
chacune des mesures a) à d) étant introduite seulement lorsque les mesures précédentes dans ladite séquence ne peuvent pas être effectuées ou sont épuisées.

2. Procédé selon la revendication 1,
**caractérisé en ce que**
il s'agit d'un moteur Otto à quatre temps comportant une ou deux soupapes d'admission et une soupape d'échappement par cylindre, les soupapes étant actionnées par un arbre à came commun au moyen d'un dispositif de réglage et le moteur Otto à quatre temps étant conçu de telle sorte qu'il fonctionne en cycle Atkinson à l'état de réglage anticipé de l'arbre à came.

3. Procédé selon la revendication 2,
**caractérisé en ce que**
à l'état de réglage anticipé de l'arbre à came, la soupape d'admission est fermée tardivement, de préférence à un angle de vilebrequin d'environ 40° à 80° après le point mort bas du piston.

4. Procédé selon la revendication 2 ou 3,
**caractérisé en ce que**
à l'état de réglage anticipé de l'arbre à came, la soupape d'admission est ouverte à proximité du point mort haut du piston.

5. Procédé selon une des revendications 2 à 4,
**caractérisé en ce que**
le moteur Otto à quatre temps présente une soupape d'étranglement actionnée de préférence de manière électromagnétique et une commande de moteur, la commande de moteur étant reliée à la soupape d'étranglement et au dispositif de réglage et conçue de telle sorte qu'elle règle celui-ci de manière coordonnée afin de satisfaire aux exigences de couple de rotation.

6. Procédé selon une des revendications 2 à 5,
**caractérisé en ce que**
le moteur Otto à quatre temps présente un système de capteurs pour détecter le cliquetis.

7. Procédé selon une des revendications 2 à 6,
**caractérisé en ce que**
le moteur Otto à quatre temps est conçu de telle sorte qu'il présente un degré de remplissage réduit, notamment en présence de régimes de rotation élevés, notamment la course et/ou le diamètre de la soupape d'admission étant réduit, la longueur et/ou le diamètre effectif du canal d'admission étant réduit et/ou la soupape d'admission étant masquée.

8. Procédé selon une des revendications 2 à 7,
**caractérisé en ce que**
le moteur Otto à quatre temps présente un dispositif de modification de la température du liquide de refroidissement, contrôlé par la commande de moteur.

9. Procédé selon la revendication 8,
**caractérisé en ce que**
le dispositif contient un thermostat à cire avec un dispositif de chauffage électrique.
